# EUROPEAN PATENT SPECIFICATION

(11) **EP 3 565 400 B1**
(45) Date of publication and mention of the grant of the patent: **07.04.2021**
(21) Application number: 18702322.1
(22) Date of filing: 02.01.2018
(51) Int. Cl.: A01D 46/26

(54) **SHAKING DEVICE AVOIDING BARK REMOVAL FOR MECHANIZED COLLECTION OF HANGING FRUITS**
SCHÜTTELVORRICHTUNG MIT VERMEIDUNG VON RINDENENTFERNUNG ZUM MECHANISCHEN SAMMELN VON HÄNGENDEN FRÜCHTEN
DISPOSITIF D'AGITATION ÉVITANT LE RETRAIT D'ÉCORCE POUR LA COLLECTE MÉCANISÉE DE FRUITS SUSPENDUS

(30) Priority: 05.01.2017 IT 201700001146
(43) Date of publication of application: 13.11.2019
(73) Proprietor: De Masi, Antonino, 89016 Rizziconi (IT)
(72) Inventor: De Masi, Antonino, 89016 Rizziconi (IT)
(74) Representative: Giuliano, Natalia
(86) International application number: PCT/IB2018/050019
(87) International publication number: WO 2018/127799

(56) References cited:
- WO-A2-2009/016640
- ES-A1- 2 273 535
- ES-A1- 2 560 977
- US-A- 3 338 040
- US-A- 3 494 654
- US-A- 4 776 156
- US-A- 5 385 006

## Description

The present invention relates to a shaking device avoiding bark removal for mechanized collection of hanging fruits.

In particular, in the present invention relates to a shaking device avoiding bark removal for mechanized collection of hanging fruits able to guarantee the environmental sustainability of mechanized collection, of the type that can be used to shake fruit plants to facilitate collection.

As it is known, the technique of shaking the trees has been consolidated for several decades and is spread all over the world, as it allows the fruit to fall and the subsequent collect them, with the appropriate means or techniques currently available, reducing costs. The mechanical shaking of the hanging fruits has pushed many manufacturers to use these techniques aiming to achieve the greatest possible fall pendant fruit, in order to speed up the timing of collection and get almost all of the fruit fall. In fact the detachment of the drupes results faster since the inertial forces, due to the movement of the fruit, faster exceed the pulling forces necessary for the detachment. These results are achieved by generating increasingly high vibrations and stresses, both in terms of frequency and amplitude of vibrations. Today there are shaking machines on the market that have very high mechanical powers, and this comes from the desire to maximize profits and exploiting the ground as much as possible, even at the expense of the health of trees. The use of these mechanic shakers also allows the farmer to be released from the time of ripening of the fruit and, therefore, to anticipate the collection linked to both the market and the type of product to be produced, as more or less raw or colored oil.

In the case of olive growing, the climatic variations that have occurred during these years as the temperatures rise, have caused to advance the collection season, making sure that the plants are processed and shook during the vegetative phase in which the bark of the tree, subjected to stress, is in a very delicate state.

The problem of damage to the cortex is linked to the use of the current shaker machines for mechanical collection, since it represents, as mentioned, an essential tool to reduce collection costs and thus allow the farmer to make more profit. Because of this problem and the damage that the use of shakers currently known causes to the plants, some farmers still refuse to use mechanized collection techniques.

Generally, the known shaking devices for mechanized collection of hanging fruits consist of a machine equipped with a shaker clamp and of a vibration generator, placed at the center or at the side of the clamp. The vibrations are produced by one or two hydraulic motors, positioned externally to the casing of the machine, which act on one or more eccentric masses, housed inside the casing itself, which, by turning, cause an oscillating movement. The transmission of the motion between the motor and the masses can be direct, that is, the masses are connected directly to the motor shaft with a suitable shaft or of coupling, or indirectly, that is to say through belts and / or chains.

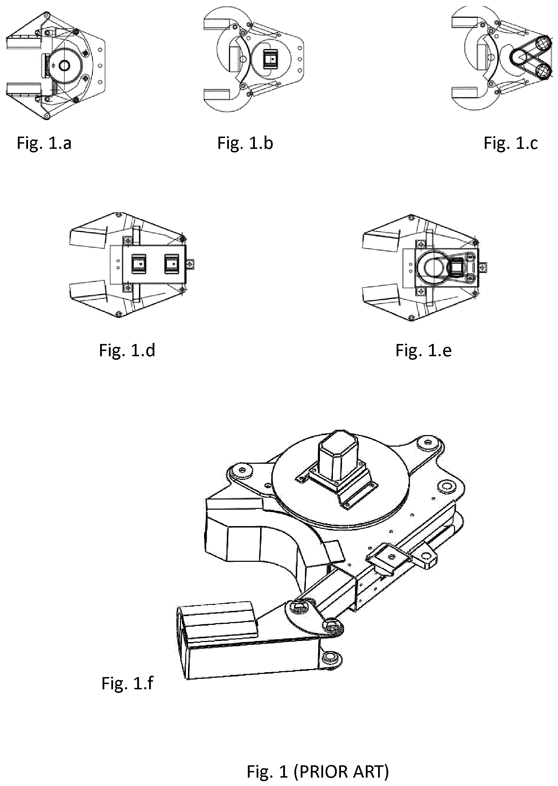

The vibration generator, as mentioned, is a system in which a rotation center, consisting of a shaft driven by one or more hydraulic motors, is connected to the eccentric masses rotated around a "Z" axis. Examples of this type are shown in figure 1. In all these solutions, more than the distance Y between the eccentric mass and the center of rotation, the greater the amplitude of the vibration and therefore of the shaking. In known devices, the distance between the eccentric mass and the center of rotation is fixed. Consequently, the shaking devices with currently known construction techniques, discharge the same energy (power) beyond the type of plant. This means that, in the case of small plants and young people, the shaking can be even destructive, while for young and old trees to the shaking may be insufficient king. This very important problem is solved with the technical solutions of the invention, as explained below.

The power of shaking is given by the weight of the mass while the frequency is a function of the number of revolutions of the hydraulic motor.

There are also known shaking systems which also have counter-rotating masses which generate opposing waves, but based on the same principle.

The known devices are typically provided, in the terminal part, of clamps of different shapes and types (single arm, or double arm, etc.) and thus allows to surround the trunk of the plants and transmits the vibrations.

Another problem present in currently known devices is the need for high shaking powers, and then the use of increasingly powerful internal combustion engines, with high fuel consumption and pollutants, and at the same time the necessity of dispersing the vibrations through damping systems, to avoid damage due to the keeping on the tree, avoiding loosening that would make the shaking useless.

Some known devices try to solve the problem of damage to the bark of the plant by placing between the clamps and the plant a system of supports or rubber interposing between the vibration generator and the plant itself. These supports allow to dampen the tensions at the interface plant-machine, and send the vibrations to the plant itself.

However, such solution presents different and critical issues. With increasing the softness of the system of supports, or the growing of the protection of the tree, the duration of the rubber support is less, and the vibrations transmitted are lower, as they result damped by the supports themselves. Moreover, the material of the supports is not easy to find, expensive or with a limited duration. In the end these supports, albeit they limit the damage of the plant, cause an enormous energy dispersion by absorbing the vibrations and increasing consumption, necessarily having to use high thermal power. On the other hand, increasing the hardness of the supports will proportionally increase the risk of barking. The currently known shaking devices inevitably cause damage to the plant.

A known solution is reported in the patent US4776156 that describes means to control imbalance of an eccentric mass connected to a rotating shaft in a shaker housing wherein the eccentric mass is adjacent to but is not fixedly connected to the shaft, wherein a first end of the mass is connected to a mass moving means which can move one end of the mass to a plurality of different distances from the rotating shaft, and is able to hold that end of the mass at each of these distances during rotation; wherein a second end of the mass is restrained from centrifugal movement during rotation of the shaft.

Anyway, this solution adjusts the eccentricity of the mass with regard to the shaft to compensate the excessive vibrations.

Purpose of the present invention is to provide a shaking device which allows to perform the fruits collection with high yields, protecting the plant and the environmental sustainability of mechanized collection eliminating energy waste, varying and optimizing the power and vibration stresses, solving the aforementioned problem concerning the impossibility of the currently known devices to customize the vibrations according to the needs of the plant.

Another purpose of the present invention is therefore to provide a shaking device in the shaking customized for the mechanized collection of hanging fruits, having characteristics such as to overcome the limits which still affect the solutions previously described with reference to the prior art.

According to the present invention, a shaking device avoiding bark removal for mechanized collection of hanging fruits is provided, as defined in claim 1.

For a better understanding of the present invention, a preferred embodiment is now described, purely by way of non-limiting example, with reference to the attached drawings, in which:
- Figures 1.a - 1.f show possible configurations of heads of shaking machines, according to the prior art;
- Figure 2 shows a schematic top view of a first embodiment of a shaking device avoiding bark removal for mechanized collection of hanging fruits, according to the invention;
- figure 3 shows a portion of the shaking device of figure 2, according to the invention;

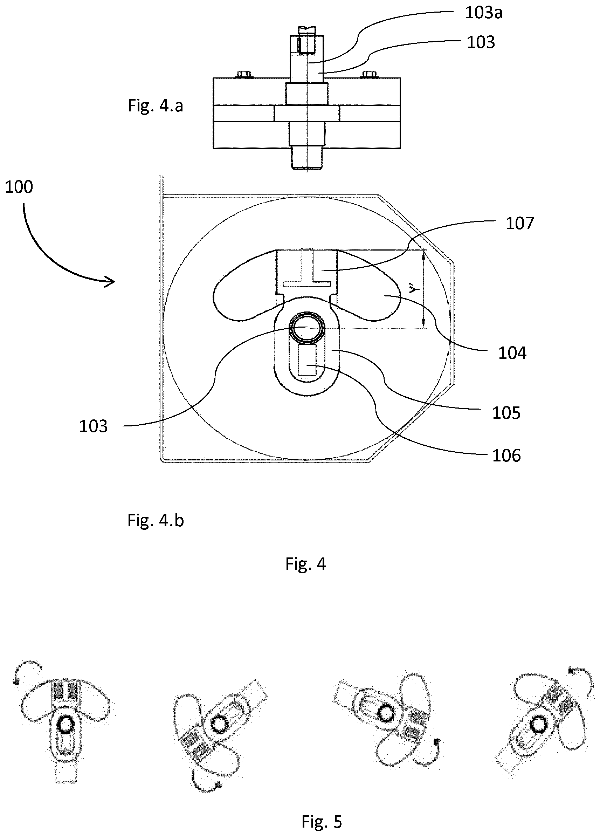

- Figures 4.a and 4.b show sectional views of the shaking device of Figure 2, according to the invention;
- Figure 5 shows rotation steps of the shaking device of figure 2, according to the invention;
- Figures 6.a-6.c show possible configurations in use of the shaking device of Figure 2, according to the invention;
- Figures 7.a-7.b show other schematic sectional views of the device of Figure 2 , according to the invention ;
- Figure 8 shows a schematic view of a second embodiment of the shaking device avoiding bark removal for mechanized collection of hanging fruits, according to the invention;
- Figure 9 shows a schematic view of a third embodiment of the shaking device avoiding bark removal for mechanized collection of hanging fruits, according to the invention;
- Figures 10.a - 10.d show distinct portions of the shaking device avoiding bark removal for mechanized collection of hanging fruits of figure 9, according to the invention;
- Figure 11 shows a detailed view of a portion of the shaking device avoiding bark removal for mechanized collection of hanging fruits of Figure 9, according to the invention;
- Figure 12 shows a perspective view of the portion shown in Figure 11, according to the invention;
- Figure 13 shows schematic views of a portion of the shaking device avoiding bark removal for mechanized collection of hanging fruits of Figure 12, according to the invention;

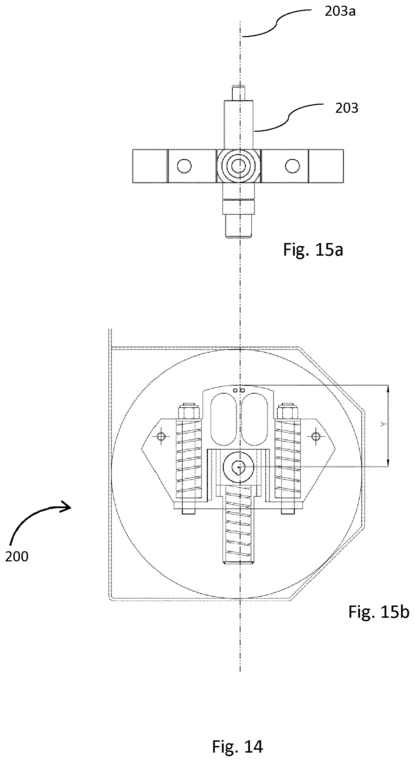

- Figures 14.a-14.b respectively show a sectional view and a top view of a portion of the shaking device avoiding bark removal for mechanized collection of hanging fruits, according to the invention;
- Figure 15 shows steps of the rotation of the shaking device avoiding bark removal for mechanized collection of hanging fruits, according to the invention;
- Figures 16.a - 16.c show possible configurations in use of the shaking device avoiding bark removal for mechanized collection of hanging fruits, according to the invention;
- Figure 17 shows a schematic view of the second embodiment of the shaking device avoiding bark removal for mechanized collection of hanging fruits, according to the invention;
- Figure 18 shows a schematic view of the third embodiment of the shaking device avoiding bark removal for mechanized collection of hanging fruits, according to the invention.

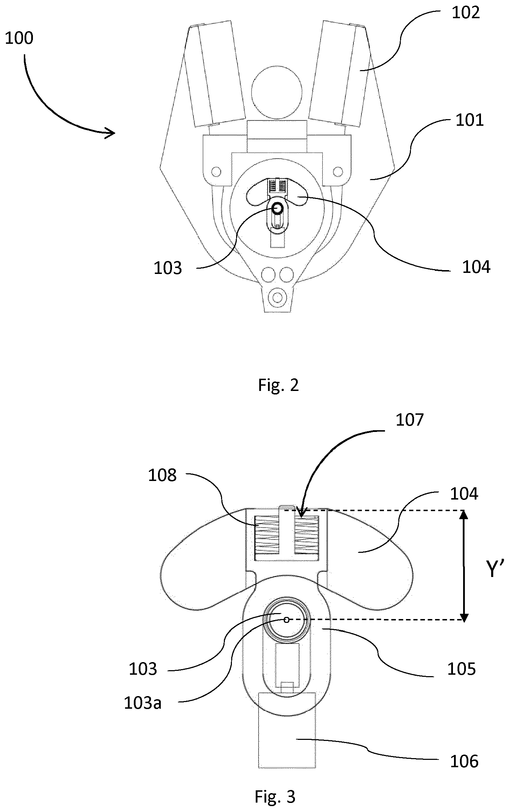

With reference to these figures and, in particular, to figure 2, a shaking device avoiding bark removal for mechanized collection of hanging fruits is shown, according to the invention. More in detail, as shown in figure 2, a first embodiment of the shaking device 100 avoiding bark removal for mechanized collection of hanging fruits comprises a head 101, an arm 102 connected to the head 101, a main shaft 103, rotating with respect to a rotation axis 103a, a mass 104 positioned on the head 101 and eccentric with respect to the main shaft 103. As better shown in Figure 3, the shaking device 100 further comprises a register 105 of the eccentric mass 104 connected to the mass 104, a regulation apparatus 106 of the distance Y' between the mass 104 and the rotation axis 103a of the main shaft 103 connected to the register 105, i.e. the eccentricity, and a vibration compensation apparatus 107 connected to the mass 104.

The shaking device 100 is connected to a hydraulic motor, designed to place and maintain the main shaft 103 in rotation. The hydraulic motor generates a wave train of adequate amplitude and frequency which, through the rotation of the main shaft 103, places moving the mass 104 housed in the head 101 which, being eccentric, generates vibrations.

According to one aspect of the invention, the eccentric mass 104 is connected to the register 105 by the vibration compensation apparatus 107 and to the main shaft 103 together with the register 105.

Advantageously according to the invention, the register 105 together with the eccentric mass 104 is preferably sliding perpendicularly to the main shaft 103.

According to an aspect of the invention, the regulation apparatus 106 of the distance Y', between the center of the mass 104 and the rotation axis 103a of the main shaft 103, is constituted by a gear reducer.

Advantageously according to the invention, the regulation apparatus 106 regulates the displacement of the eccentric mass 104 from the rotation axis 103a of the main shaft 103, without having to manually disassemble any component.

According to a non-limiting aspect of the invention, as shown in Figure 3, the vibration compensation apparatus 107 is composed of a spring 108, appropriately sized, placed in a seat formed within the eccentric mass 104, and positioned in a manner such as to counteract sudden vibrations during starting and stopping the rotation of the mass 104.

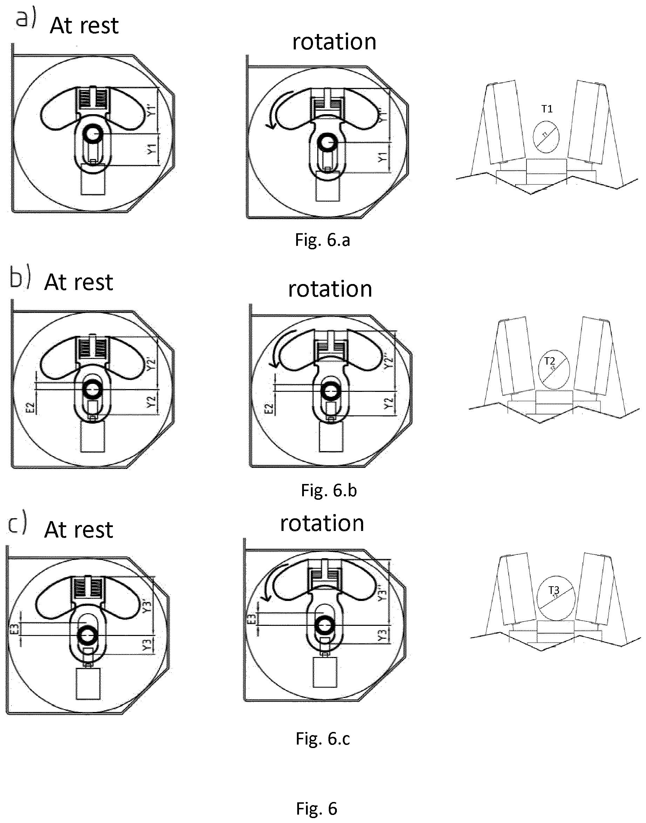

In particular, the eccentric mass 104 is adjustable in a series of positions in relation to the requirements of the plant. By way of example, figures 6a, 6b and 6c show three positions adjustable by the geared motor. This adjustment is made according to the type of plant taken into consideration, depending on the size of the diameter, the type of fruit, the vegetative period, etc., so as to dose correctly and with minimal consumption the intensity of the vibrations transmitted to the plant same.

In fig. 6a, at rest, the letters Y1 and Y1' respectively indicate the distance between the mass 104 and one end of the register 105 and the distance between the eccentric mass 104 and the main rotation shaft 103. Consider a trunk to be shaken having a diameter T1 (Fig. 6a). When this mass 104 rotates, its weight shifts by a quantity which produces a distance greater than Y1'' with respect to the previous rest distance Y1' (Yl''> Y1'), and in this case the vibration compensation apparatus 107, compressing itself, dampens the shaking (fig 6a).

In fact, as is known, as the distance of the eccentric mass 104 from the rotation axis increases, just as it rotates, there is an increase in the twisting effect produced by the mass 104 and therefore an increase in the vibrations produced by the displacement of its weight. The risk is to cause excessive tearing that would damage the tree, especially in the initial phase of grip and in the final release of the tree itself.

Advantageously, the presence of the appropriately sized vibration compensation apparatus 107 dampens the twisting energy, making vibrations gradual and allowing the shaker to start and stop without damaging the plant.

Fig.6b shows another possible position for a trunk with diameter T2 (with T2> T1), in which it is noted that the geared motor, manually controlled by the operator or in a fully automatic manner, as specified below, has moved forward (outwards) the eccentric mass 104 of a quantity designated with E2 which is here defined eccentricity, intended as distance between two centers, identifying the new coordinates Y2 and Y2' (with Y2<Y1, Y2'>Y1', in particular Y2'= Y1' + E2), thus obtaining an overall increase in the vibrations produced. The rotation produces an increased distance Y2'' (Y2''> Y2') managed by the compression of the springs 108.

Such vibrations can be even more intensified thanks to the "booster" effect provided by the invention. In fact, as shown in figure 6.c, there is a last position for a trunk of diameter T3 (with T3> T2), in which the electric gearmotor further displaces the eccentric mass 104 of an amount E3> E2, thus identifying the new distances Y3, Y3' and Y3'' (with Y3<Y2, Y3'> Y2', Y3''> Y3') with respect to the rotation axis.

In this way, it is possible to use customized vibrations on the shaft, exploiting a "surplus" of power only in case of need (for example for large and secular plants) and for a limited period considered appropriate by the operator. Advantageously, the result obtained is therefore that of having a mechanical absorption of the head modifiable in relation to the needs of the plants, so that the shaking power is always optimal without wasting energy, superfluous consumption and without damaging the plants themselves.

Advantageously, the device according to the invention allows to vary and optimize the power and vibration stresses according to the needs of the treated plant, or relying on the operator or in a completely automatic, hence "intelligent" manner.

According to an aspect of the invention, the shaking device 100, and the related regulation apparatus 106, can be controlled by the operator with a suitable electric control, not shown in the figures, making sure that each shaft has the correct power of vibration.

Advantageously according to the invention, the presence of the electric control makes the use of the shaking device 100 simple and intuitive.

According to an aspect of the invention, the shaking device 100 and the regulation apparatus 106 can be controlled by means of a signaling device, or chip inserted on the rotation shaft, or by means of an optical detector, or with any suitable transduction system operated by software, so that the shaking device 100 in an "intelligent" way, that is in a completely automatic way, is able to set the movement of the masses, thus giving the right adjustment of the shaking power.

Advantageously, the shaking device 100 according to the invention allows to automatically set the vibrations to drop the drupes from the plant.

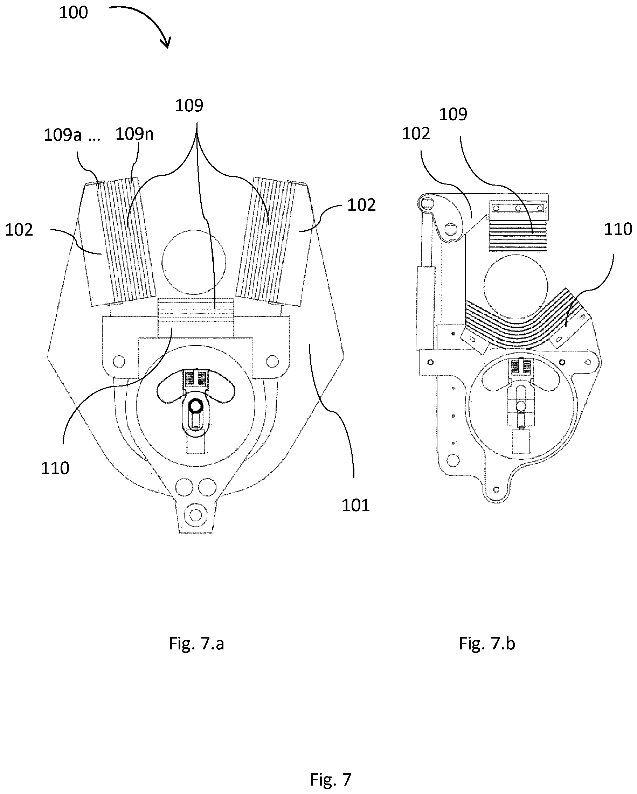

With reference to Figure 7, according to an aspect of the invention, the shaking device 100 further comprises a support element 109, for example made of elastic material, placed in the terminal part of the arm 102 and on a seat 110. The configuration of the head 101 shown in Figure 7 it is not to be considered limiting but as an example of a preferred configuration.

Advantageously, by means of the support element 109, the contact pressure at the interface between the trunk of a tree and the shaking device is adaptable to the characteristics and needs of the plant, reducing the risk of damage to the cortex.

According to an aspect of the invention, the support element 109 is made of a plurality of layers 109a, 109b ... 109n which, advantageously, have a very reduced thickness with respect to the supports existing in the prior art.

According to an aspect of the invention, each layer constituting the multiplicity of layers 109a, 109b ... 109n of elastic material, for example of rubber, has a different density with respect to the other layers.

Advantageously, the support element consisting of layers 109a, 109b ... 109n of differentiated density allows to make sure that the last two or three layers, which in use are in contact with the plant, consist of particularly soft material, making sure that that the tree is not damaged.

Advantageously, in relation to the different types of plants, this support element 109, which can be composed of a variable number of layers, with different densities, also customizes the tension, or the pressure, of closing the shaking device on the trunk related to the status and the vegetative period of the plant itself.

According to an aspect of the invention, the shaking device 100 comprises at least one sensor located in the terminal part of the arm 102 adapted to register and adjust the allowable closing pressure.

Advantageously, the support element 109 constituted by a multiplicity of layers, also allows a considerable saving on the maintenance of the device since the various layers have low costs, therefore a replacement thereof, for example, when their life is exhausted, is advantageous compared to traditional rubber supports.

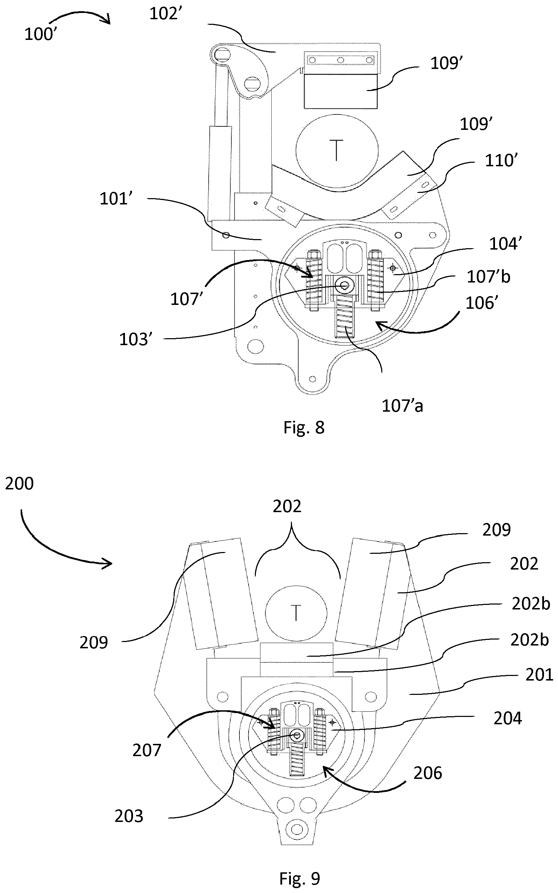

In figures 8 and 9 a second and a third embodiment of the shaking device are shown, according to the invention.

More in details, the shaking device 100', 200 comprises a head 101', 201, at least one arm 102', 202 connected to the head 101', 201, a main shaft 103', 203, rotating with respect to a rotation axis 103', 203, a mass 104', 204 positioned on the head 101', 201 and eccentric with respect to the main shaft 103', 203. As best shown in figures 8 and 9, the shaking device 100', 200 also comprises a register 105', 205 of the eccentric mass 104', 204 connected to the mass 104', 204 itself, a regulation apparatus 106', 206 of the distance Y' between the mass 104', 204 and the rotation axis 103'a, 203a of the main shaft 103', 203 connected to the register 105', 205, or of the eccentricity.

According to an aspect of the invention, the regulation apparatus 106', 206 comprises a vibration compensation apparatus 107', 207, for example a spring system.

According to a preferred embodiment, shown in the figures, the spring system is formed by three springs, one of which is positioned perpendicular to the axis 103', 203 and two springs 107'b, 207b positioned respectively on the sides of the axis 103', 203.

Figure 8 shows a first embodiment of the device 100' of the single-arm type, comprising at least one movable arm connected to the head 101'. In Figure 9 a second embodiment of the device 200 is shown, i.e. with a double arm. The second embodiment 200 of the invention as shown in Figure 9 comprises a fixed support 202b, integral with the head 201 and two movable arms 202. In both configurations, at least one movable arm 202 wraps the trunk of a plant, identified with T in the figures.

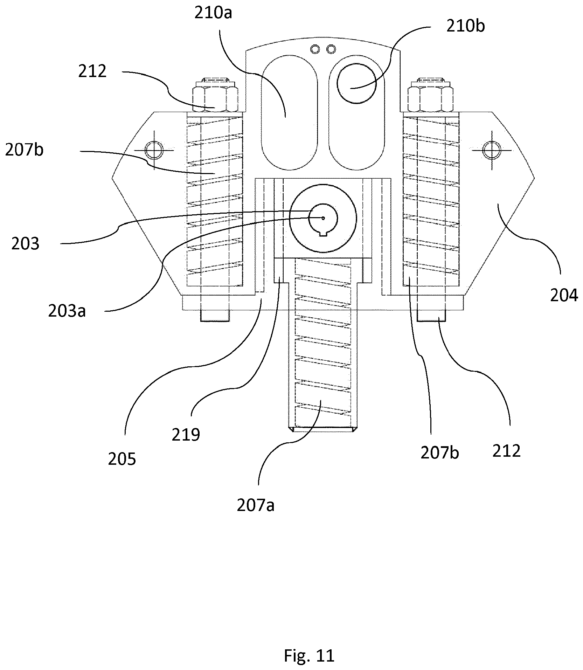

According to an aspect of the invention, as shown in Figure 11, the shaking device 100', 200 comprises a register 105', 205 of the mass 104', 204 connected to the mass 104', 204 itself and a guide 119', 219 which does not undergo translations but is rotating with respect to the aforesaid axis 103'a, 203 and on which the shaft 103', 203 is coupled. The guide 119', 219 allows the sliding of the register 105', 205 which in turn drives the translation movement of the mass 104', 204.

According to an aspect of the invention, as shown in Figure 11 the device comprises at least a first ballast element 110'b, 210b of preferably cylindrical shape, which constitutes an optional ballast to be added to the mass 104', 204.

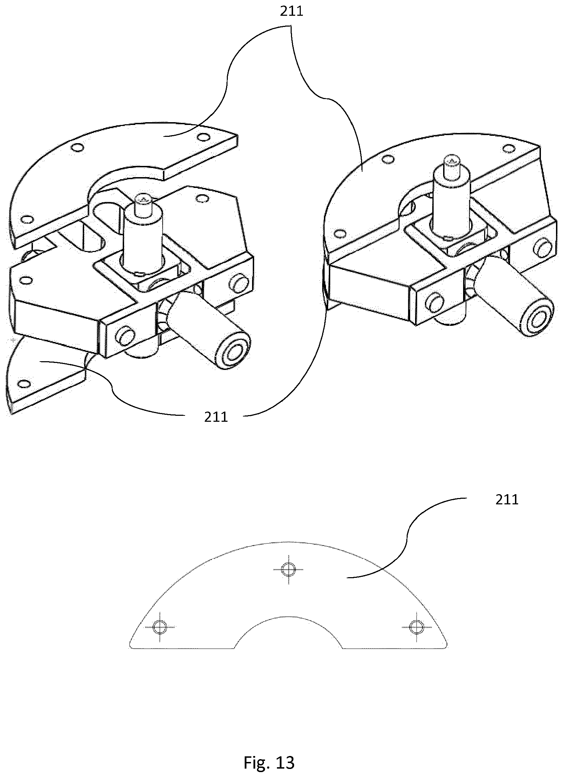

According to another aspect of the invention, as shown in Figure 13, the device 100', 200 comprises a second or more element ballast 111', 211, each connectable to the mass 104', 204 by means of suitable holes and fastening elements, and removably fixed to the device so as to increase, where necessary, the weight of the eccentric mass 104', 204.

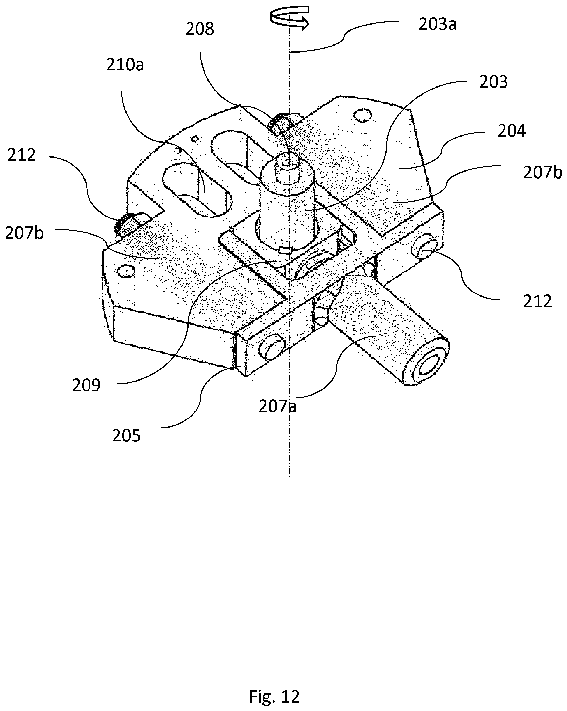

The shaking device 100', 200 is connected to an external hydraulic motor 108', 208 shown in Figures 8 and 12, suitable for putting and maintaining the rotation of the main shaft 103', 203. The hydraulic motor generates a wave train of adequate amplitude and frequency which, by rotating the main shaft 103', 203 sets the guide 119', 219 in motion, the register 105', 205 and the mass 104', 204 housed in the head 101', 201 which, being eccentric, generates vibrations.

According to an aspect of the invention, the eccentric mass 104', 204 is connected to the register 105', 205 by means of pins 112', 212 on which the springs 107'b and 207b and the main shaft 103' and 203 together with the register 105' and 205 run.

Advantageously, according to the invention, the register 105', 205 together with the eccentric mass 104', 204 is preferably sliding perpendicularly to the main shaft 103', 203.

The springs 107'a, 107'b, 207a, 207b are, for example, configured in compression for extreme loads and in a number greater than or equal to one. In the embodiment shown in Figure 11, the springs are three, a spring 207a positioned perpendicular to the axis 203 and two springs 207b positioned respectively on the sides of the axis 203. Preferably, the spring 207a is placed in a seat formed inside the register 205 and the two springs 207b are placed in parallel in the seats formed inside the eccentric mass 104'a, 204a. The spring 207a automatically controls the variation of the register 205. The springs 207b in use run on said seats 204a and on the pins 212 which act as a connection between registers 205 and ground 204, and as a stop for springs 207b.

Advantageously according to the invention, the springs 207a and 207b have the function of contrast for the sudden vibrations which occur during use, during the shaking, both in the transitory phases of starting and stopping the rotation and during the steady state phase.

According to an aspect of the invention the springs are arranged so that they are coupled one inside the other, to better manage the vibrations produced by the rotation of the eccentric mass.

Advantageously according to the invention, the regulation apparatus 106', 206 regulates the displacement of the mass 104', 204 eccentric from the rotation axis 103'a, 203a of the main shaft 103', 203 without having to manually disassemble any component.

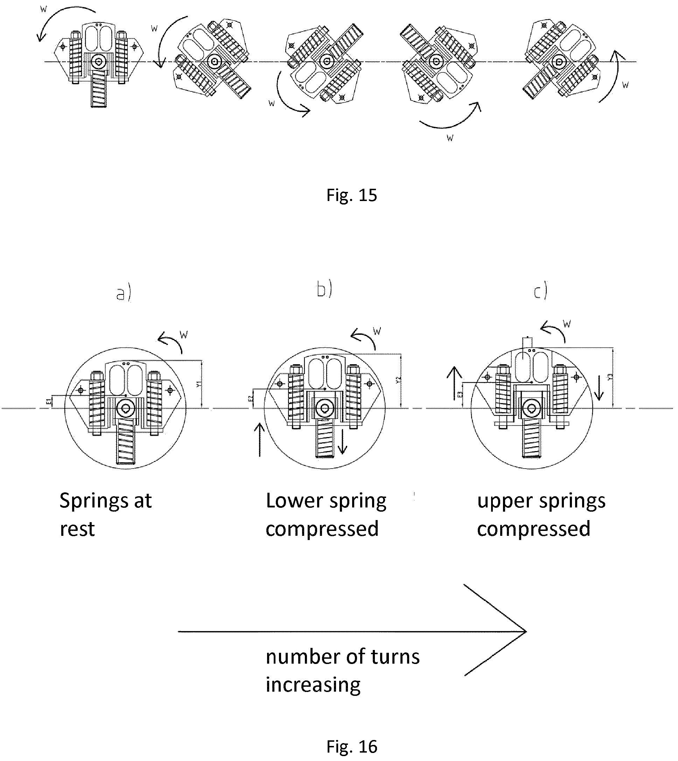

In figure 16 the behavior, in use, of the axis is shown schematically rotating 203a when it is set in rotation by the motor 208 with angular speed W, as the speed increases. The springs are initially at rest (Fig. 16.a) and the distance between the ends of the eccentric mass and the center of rotation around the axis 203a is designated by Y1, similarly the eccentricity of the mass 104', 204 as the distance between the center of rotation and the center of gravity of the mass 204 is E1. As the number of turns increases, as shown in Figure 16.b, an increase in centrifugal force occurs and the eccentric mass physically tends to move away from the center of rotation, going outwards; in this phase, however, the tendency of outward excursion is regulated by the register 205. The latter moves outwards (in the case of Fig. 16b is schematized with an upward arrow) up to the available geometric space delimited by the guide 219, dragging with it the same mass eccentric 204 via the connecting pins 212 12, but such global shift occurs gradually thanks to the compression of the spring 207a (Fig. 16.a, downward arrow).

It is evident that, in such a situation, the distance between the end of the mass 204 and the center of rotation is increased, and is equal to Y2> Y1, just as the eccentricity is increased by the same amount E2> E1. The aforementioned movement, delimited precisely by the guide 219, is also equal to the travel of the spring 207a, until it reaches the "pack" length, here understood as the maximum permissible compression from the spring, not shortening any more.

In this phase the springs 207b are still at rest. However, gradually, which further increases the number of revolutions (step 3, for N3> N2, Fig. 16.c), also the springs 207b preferably placed in parallel play a role, since the increased number of turns produces a further increase of the centrifugal force, and hence the eccentric mass 204 tends to move away more and more from the center of rotation (upward arrow, Fig. 16.c). The further hike, equal to Y3> Y2 and, consequently, E3> E2, in this case corresponds only to the stroke of the system of springs 207b in parallel that are compressed (arrow downward Fig. 16.c), until to arrive at the "pack" length, beyond which, even if the number of revolutions is increased, the displacement of the eccentric mass to the outside stops; this stop is guaranteed by the rigidity constant of the spring system which, being parallel, is twice the constant of the single spring.

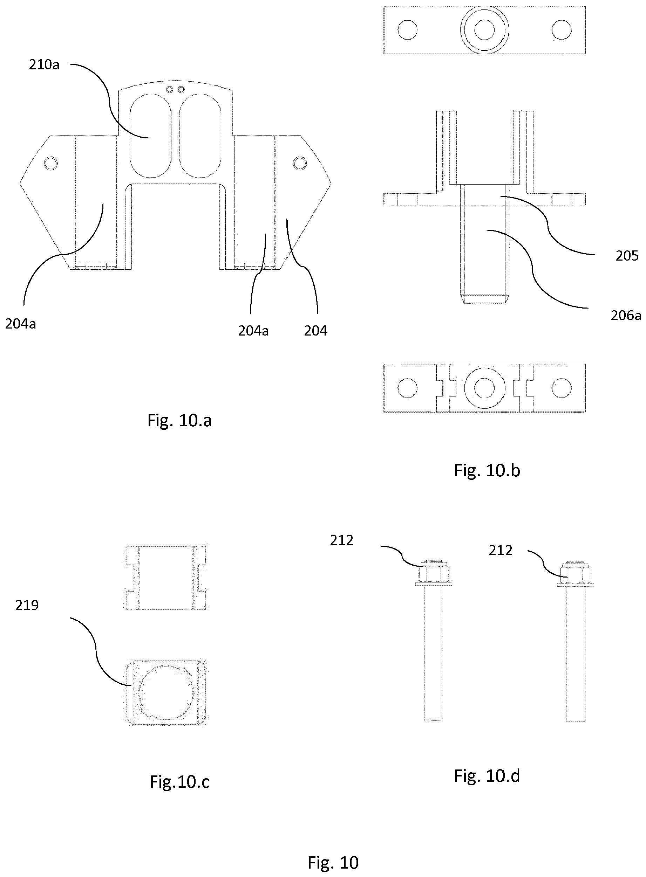

As is known, in general with increasing Y (and therefore E), in relation to the increase in the number of revolutions, there is a twisting effect produced by the eccentric mass 104', 204, and therefore an increase in the vibrations produced by the displacement of the same. The risk would be that of causing excessive tugs that would bark the tree but, advantageously, the presence of the springs 207a and 207b, housed in the appropriate seats 204a and 206a, shown in figure 10, formed in the mass 104', 204 and in the register 205, it makes such gradual vibrations, avoiding damage to the plant.

According to a preferred embodiment shown in figure 12, the mass 104', 204 looks like a solid body provided with openings, for example in the shape of slots 210a, designed to make housing and lock internally additional ballast elements 111', 211, which are elements that can be connected optionally to the mass itself so as to vary the weight and center of gravity according to the needs.

Advantageously, the possibility of connecting to the mass 104', 204 an additional element in order to vary the weight, allows to adapt the device 100', 200 for use on different robustness plants by varying the power, making the device particularly customizable.

Advantageously, the shaking device 100', 200 has an eccentric mass 204 whose center of gravity has a variable distance from the center of rotation, then customizing power amplitude and frequency of the shaking, regardless of the possibility of varying the weight of the mass itself.

Advantageously, the invention is applicable on a multiple number of machines, with heat engines with different performance characteristics, as well as to better adapt the intensity of the shaking depending on the needs of the plant.

The frequency of the shaking, which is a function of the hydraulic motor number of revolutions, can be dosed with better performance on multi-purpose machines thanks to the innovative hydraulic systems (MMOS, multifrequency, multirange, oil system at constant pressure) that, by maintaining a constant RPM of the heat engine, allow to vary the oil flows arriving at the head. One way, therefore, to vary the frequency of the shaking, it is to ensure that the operator acts on the appropriate command (for example, via joystick) so that the face to vary the oil flow and consequently the hydraulic motor number of revolutions.

In addition, the all-important variable geometry mentioned above (i.e. the different distances between the center of gravity of the eccentric mass and the center of rotation of the same), as mentioned, allows the variation of the frequency and power of the shaking, which is not possible on traditional shakers which generally have a fixed distance (from us already patented system known as "PFV, variable power and frequency").

Advantageously, the device according to the invention allows to vary and optimize the power and vibration stress according to the need of the treated plant, or trusting the operator or in a completely automatic way, hence "intelligent."

According to an aspect of the invention, the shaking device 100', 200 can be driven by the operator with an appropriate electric control, not shown in the figures, making sure that each tree has the proper power of vibration.

Advantageously according to the invention, the presence of the electric control makes the use of the shaking device 100', 200 simple and intuitive.

Advantageously, the shaking device 100', 200 according to the invention allows to automatically set the vibrations for dropping the drupes from the plant.

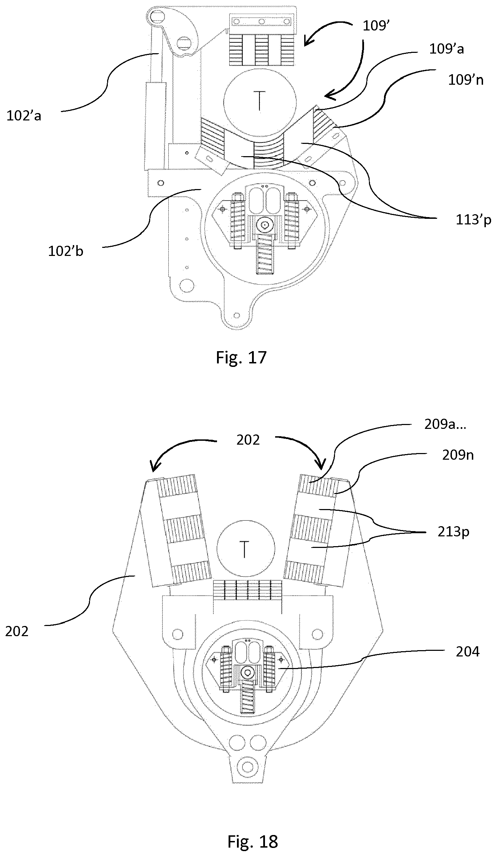

With reference to Figures 17 and 18, according to an aspect of the invention, the shaking device 100', 200 further comprises a support element 109', 209 for example made of elastic material, placed in the terminal part of the arm 102', 202 and a seat 110', 202b. The configuration of the head 101', 201 shown in Figure 17 is not to be considered limiting but by way of example of a preferred configuration.

Advantageously, by means of the support element 109', 209 the contact pressure at the interface between the trunk of a tree and the shaking device is adaptable to the characteristics and needs of the plant, reducing the risk of damage to the cortex.

According to an aspect of the invention, the support element 109', 209 is done by a multiplicity of layers 109'a, 109'b ... 109'n, 209a, 209b ... 209n fixed and held together by means of fasteners, or bibs, 113'p, 213p connected to the head.

Advantageously, the plurality of layers 109'a, 109'b ... 109'n, 209a, 209b ... 209n has much reduced thickness respect to existing supports in the prior art.

According to an aspect of the invention, each layer constituting the multiple layers 109'a, 109'b ... 109'n 209a, 209b ... 209n in elastic material, for example made of rubber, has a different density than the other layers.

Advantageously, the support element consisting of layers 109'a, 109'b ... 109'n, 209a, 209b ... 209n of differentiated density allows to make sure that the last two or three layers, which in use are in contact with the plant, consist in a particularly soft material, making sure that the shaft not to be damaged.

Advantageously, the in relation to different types of plants, such support element 109', 209 which may be composed of a variable number of layers, with different densities between them, makes also customizable tension, i.e. the pressure, of the closing device shaker on the trunk relatively to the state and to the vegetative period of the plant itself.

According to an aspect of the invention, the device shaker 100', 200 comprises at least one sensor and place in the terminal part of the arm 102', 202 adapted to record and adjust the closing pressure permissible.

Advantageously, the support element 109', 209 consisting of a plurality of layers 109'a...109'n, 209a ...209n, allows in addition a considerable saving on the maintenance device from the moment that the various layers have low costs, therefore, a replacement for them, for example exhausted their useful life, is advantageous compared to traditional rubber mounts.

Therefore, the shaking device avoiding bark removal for mechanized collection of hanging fruits according to the invention can be applied both to heads with single arm and to those having double-arm (with clamps), therefore to the most types of shakers heads currently on the market.

In addition, the shaking device avoiding bark removal for mechanized collection of hanging fruits according to the invention, allows a "customizable" shaking and energy-saving because, for equal shaking, uses very reduced thermal powers, variable and adaptable to the characteristics of each plant, with both automatic and manual controls.

In addition, the shaking device avoiding bark removal for mechanized collection of hanging fruits according to the invention avoids damage.

Advantageously, the shaking device avoiding bark removal for mechanized collection of hanging fruits according to the invention allows to vary and optimize the power and vibration stresses, mainly depending on the needs of the plant and, if necessary, by varying the weight and the geometry of the eccentric mass based on the available thermal power of the motor of the machine which is connected to the shaker.

Advantageously, the shaking device avoiding bark removal for mechanized collection of hanging fruits according to the invention allows to reduce the waste of energy, reducing the consumption of 40% compared to traditional systems, allowing to carry out the collection of hanging fruits with high yields, while preserving at the same time the plant from barking and promoting environmental sustainability.

Another advantage of the shaking device avoiding bark removal for mechanized collection of hanging fruits according to the invention is to present the best performance on multi-purpose machines, based on a MMOS system (multifrequency, multirange, oil system at constant pressure), constituted by a hydraulic system appropriate which, in regime of constant speed of the internal combustion engine, allows to vary the oil flows arriving at the head by means of a joy-stick on the driver's seat, dosing necessary power and frequency of the shaking.

Another advantage of the shaking device avoiding bark removal for mechanized collection of hanging fruits according to the invention is to involve reduced consumption, to be lightweight and not bulky.

In addition, the shaking device avoiding bark removal for mechanized collection of hanging fruits according to the invention limits to the minimum the torches effect that is discharged on the plant and the plant-machine contact tensions, both in start-up phase of the shaking both the release of the plant, thus avoiding the barking plant.

Advantageously, the shaking device avoiding bark removal for mechanized collection of hanging fruits according to the invention allows the energy saving.

Another advantage of the shaking device avoiding bark removal for mechanized collection of hanging fruits according to the invention is to have the power of the shaking adjustable, either manually or automatically, through the variation of the vibration frequency and the distance of the eccentric mass from the rotation axis.

In addition, the shaking device avoiding bark removal for mechanized collection of hanging fruits according to the invention has a booster effect which allows to download a greater power of vibration of particularly resistant trees and with difficulty fall of the fruit.

Additionally, the shaking device avoiding bark removal for mechanized collection of hanging fruits according to the invention, unlike the devices currently known in which the power is adjustable by acting solely on the number of revolutions of the hydraulic motor, can be adjusted, automatically or manually, according to the characteristics of the plant.

Finally, the shaking device avoiding bark removal for mechanized collection of hanging fruits according to the invention avoids the damage to the plant and of its bark.

Finally, it is clear that the shaking device avoiding bark removal for mechanized collection of hanging fruits according to the invention, here described and illustrated can be subject to modifications and variations without thereby departing from the scope of the present invention, as defined in the appended claims.

## Claims

1. Shaking device (100, 100', 200) for avoiding bark removal for mechanized collection of hanging fruits comprising:
- a head (101, 101', 201);
- at least one arm (102, 102', 202) connected to the head (101, 101', 201);
- a main shaft (103, 103', 203), rotating with respect to a rotation axis (103a, 103'a, 203a);
- at least one mass (104, 104', 204) positioned on the head (101, 101', 201) and eccentric with respect to the main shaft (103, 103', 203);
- a register (105, 105', 205) of the eccentric mass (104, 104', 204) connected to said mass (104, 104', 204) and to the main shaft (103, 103', 203) together to the eccentric mass (104, 104', 204);
- a regulation apparatus (106, 106', 206) for regulating the distance between the center of the mass (104, 104', 204) and the rotation axis (103a, 103'a, 203a) of the main shaft (103, 103', 203) connected to said register (105, 150', 205);
**characterized in that** the regulation apparatus (106, 106', 206) comprises a vibration compensation apparatus (107, 107', 207) connected to the eccentric mass (104, 104', 204) and connecting the register (105, 105', 205) to said eccentric mass (104, 104', 204).

2. Shaking device (100, 100', 200) according to claim 1, **characterized in that** the vibrations compensation system (107, 107', 207) comprises at least one spring (108; 107'a, 107'b; 207a, 207b), located in a seat formed within the eccentric mass (104).

3. Shaking device (100, 100', 200) according to claim 2, **characterized in that** the vibrations compensation system (107', 207) comprises a first spring (107'a, 207a) positioned perpendicular to the rotation axis (103', 203) configured to automatically control the variation of the register (105', 205) and a second and third spring (107'b, 207b) positioned respectively on the sides of the axis (103', 203).

4. Shaking device (100, 100', 200) according to claim 3, **characterized in that** the first spring (107'a, 207a) is placed in a seat formed inside the register (105', 205) and the second and third spring (107'b, 207b) is placed in parallel in the seat formed within the eccentric mass (104'a, 204a) .

5. Shaking device (100, 100', 200) according to claim 1, **characterized in** comprising at least one guide (119', 219) rotating with respect to the rotation axis (103'a, 203a) and on which the shaft (103', 203) is coupled and configured for the sliding of the register (105', 205) perpendicularly to the main shaft (103', 203) and let the mass (104', 204) shift.

6. Shaking device (100, 100', 200) according to claim 1, **characterized in** comprising at least a first ballast element (210b, 211) added to the eccentric mass (104', 204), and at least another ballast element (111', 211) connectable in removable manner to the eccentric mass (104', 204) by means of holes and fixing elements.

7. Shaking device (100, 100', 200) according to claims 1 and 6, **characterized in that** the eccentric mass (104', 204) is a solid body provided with openings (210a), configured for housing and blocking the additional ballast elements (111', 211).

8. Shaking device (100, 100', 200) according to the preceding claims, **characterized in** being connected to an external hydraulic motor (108', 208) configured to position and maintain the main axis (103', 203) in rotation and to keep the guide (119', 219) in motion, the regulation apparatus (106', 206) and the mass (104', 204) housed in the head (101', 201).

9. Shaking device (100, 100', 200) according to claim 1, **characterized in that** the register (105', 205) and the eccentric mass (104', 204) is configured to slide perpendicular to the main axis (103', 203).

10. Shaking device (100, 100', 200) according to claim 1, **characterized in that** the eccentric mass (104', 204) has the center of gravity at a variable distance from the center of rotation.

11. Shaking device (100, 100', 200) according to claim 1, **characterized in** comprising at least one movable arm connected to the head (101').

12. Shaking device (100, 100', 200) according to claim 1, **characterized in** comprising a fixed support (202b), integral with the head (201) and two movable arms (202).

13. Shaking device (100, 100', 200) according to claim 1, **characterized in** comprising a support element (109, 109', 209) located on a seat (110, 110', 210) of the terminal part of the arm (102, 102', 202) and comprising a plurality of layers (109a...109n; 109'a, 109'b ... 109'n; 209a, 209b ... 209n) having different density each other and being fixed and held together by means of fasteners (113'p, 213p) connected to the head (101', 201).

14. Shaking device (100, 100', 200) for avoiding bark removal for mechanized collection of hanging fruits according to claim 1, **characterized in that** said regulation apparatus (106, 106', 206) is provided with means to set the automatic displacement of the mass (104, 104', 204).

## Patentansprüche

1. Schüttelvorrichtung (100, 100', 200) zur Vermeidung einer Rindenablösung beim mechanisierten Sammeln von hängenden Früchten, umfassend:
- einen Kopf (101, 101', 201);
- mindestens einen Arm (102, 102', 202), der mit dem Kopf (101, 101', 201) verbunden ist;
- eine Hauptwelle (103, 103', 203), die sich in Bezug auf eine Drehachse (103a, 103'a, 203a) dreht;
- mindestens eine Masse (104, 104', 204), die auf dem Kopf (101, 101', 201) positioniert und in Bezug auf die Hauptwelle (103, 103', 203) exzentrisch ist;
- einen Ausrichter (105, 105', 205) der exzentrischen Masse (104, 104', 204), der mit der Masse (104, 104', 204) und zusammen mit der exzentrischen Masse (104, 104', 204) mit der Hauptwelle (103, 103', 203) verbunden ist;
- eine Regulierungsvorrichtung (106, 106', 206) zum Regulieren des Abstands zwischen dem Mittelpunkt der Masse (104, 104', 204) und der Drehachse (103a, 103'a, 203a) der Hauptwelle (103, 103', 203), die mit dem Ausrichter (105, 150', 205) verbunden ist;
**dadurch gekennzeichnet, dass** die Regulierungsvorrichtung (106, 106', 206) eine Schwingungskompensationsvorrichtung (107, 107', 207) umfasst, die mit der exzentrischen Masse (104, 104', 204) verbunden ist und den Ausrichter (105, 105', 205) mit der exzentrischen Masse (104, 104', 204) verbindet.

2. Schüttelvorrichtung (100, 100', 200) nach Anspruch 1, **dadurch gekennzeichnet, dass** das Schwingungskompensationssystem (107, 107', 207) mindestens eine Feder (108; 107'a, 107'b; 207a, 207b) umfasst, die in einem innerhalb der exzentrischen Masse (104) ausgebildeten Sitz angeordnet ist.

3. Schüttelvorrichtung (100, 100', 200) nach Anspruch 2, **dadurch gekennzeichnet, dass** das Schwingungskompensationssystem (107', 207) umfasst: eine erste Feder (107'a, 207a), die senkrecht zur Drehachse (103', 203) positioniert ist und so konfiguriert ist, dass sie die Veränderung des Ausrichters (105', 205) automatisch steuert, und eine zweite und eine dritte Feder (107'b, 207b), die jeweils an den Seiten der Achse (103', 203) positioniert sind.

4. Schüttelvorrichtung (100, 100', 200) nach Anspruch 3, **dadurch gekennzeichnet, dass** die erste Feder (107'a, 207a) in einem Sitz angeordnet ist, der innerhalb des Ausrichters (105', 205) ausgebildet ist, und die zweite und dritte Feder (107'b, 207b) parallel in dem Sitz angeordnet sind, der innerhalb der exzentrischen Masse (104'a, 204a) ausgebildet ist.

5. Schüttelvorrichtung (100, 100', 200) nach Anspruch 1, **dadurch gekennzeichnet, dass** sie mindestens eine in Bezug auf die Drehachse (103'a, 203a) rotierende Führung (119', 219) aufweist, an die außerdem die Welle (103', 203) gekoppelt ist und die zum Verschieben des Ausrichters (105', 205) senkrecht zur Hauptwelle (103', 203) konfiguriert ist und eine Verlagerung der Masse (104', 204) ermöglicht.

6. Schüttelvorrichtung (100, 100', 200) nach Anspruch 1, **dadurch gekennzeichnet, dass** sie umfasst: mindestens ein erstes Ballastelement (210b, 211), das der exzentrischen Masse (104', 204) hinzugefügt ist, und mindestens ein weiteres Ballastelement (111', 211), das mittels Löchern und Befestigungselementen in lösbarer Weise mit der exzentrischen Masse (104', 204) verbindbar ist.

7. Schüttelvorrichtung (100, 100', 200) nach einem der Ansprüche 1 und 6, **dadurch gekennzeichnet, dass** die exzentrische Masse (104', 204) ein massiver, mit Öffnungen (210a) versehener Körper ist, der zur Aufnahme und Blockierung der zusätzlichen Ballastelemente (111', 211) konfiguriert ist.

8. Schüttelvorrichtung (100, 100', 200) nach den vorhergehenden Ansprüchen, **dadurch gekennzeichnet, dass** sie mit einem externen Hydraulikmotor (108', 208) verbunden ist, der so konfiguriert ist, dass er die Hauptachse (103', 203) positioniert und in Drehung hält und die Führung (119', 219) in Bewegung hält, wobei die Regulierungsvorrichtung (106', 206) und die Masse (104', 204) in dem Kopf (101', 201) untergebracht sind.

9. Schüttelvorrichtung (100, 100', 200) nach Anspruch 1, **dadurch gekennzeichnet, dass** der Ausrichter (105', 205) und die exzentrische Masse (104', 204) so konfiguriert sind, dass sie senkrecht zur Hauptachse (103', 203) gleiten.

10. Schüttelvorrichtung (100, 100', 200) nach Anspruch 1, **dadurch gekennzeichnet, dass** die exzentrische Masse (104', 204) den Schwerpunkt in einem variablen Abstand zum Drehpunkt hat.

11. Schüttelvorrichtung (100, 100', 200) nach Anspruch 1, **dadurch gekennzeichnet, dass** sie mindestens einen beweglichen Arm umfasst, der mit dem Kopf (101') verbunden ist.

12. Schüttelvorrichtung (100, 100', 200) nach Anspruch 1, **dadurch gekennzeichnet, dass** sie einen festen Träger (202b), der mit dem Kopf (201) fest verbunden ist, und zwei bewegliche Arme (202) umfasst.

13. Schüttelvorrichtung (100, 100', 200) nach Anspruch 1, **dadurch gekennzeichnet, dass** sie umfasst: ein Trägerelement (109, 109', 209), das auf einem Sitz (110, 110', 210) des Endteils des Arms (102, 102', 202) angeordnet ist und das umfasst: eine Vielzahl von Schichten (109a...109n; 109'a, 109'b ... 109'n; 209a, 209b ... 209n), die jeweils eine unterschiedliche Dichte aufweisen - und mittels Befestigungselementen (113'p, 213p), die mit dem Kopf (101', 201) verbunden sind, befestigt und zusammengehalten werden.

14. Schüttelvorrichtung (100, 100', 200) zur Vermeidung einer Rindenablösung für das mechanisierte Sammeln von hängenden Früchten nach Anspruch 1, **dadurch gekennzeichnet, dass** die Regulierungsvorrichtung (106, 106', 206) mit einer Einrichtung zur Einstellung der automatischen Verlagerung der Masse (104, 104', 204) versehen ist.

## Revendications

1. Dispositif de secousse (100, 100', 200) permettant d'éviter l'enlèvement de l'écorce pour la collecte mécanisée des fruits suspendus, comprenant :
- une tête (101, 101', 201) ;
- au moins un bras (102, 102', 202) relié à la tête (101, 101', 201) ;
- un arbre (103, 103', 203) principal, tournant par rapport à un axe de rotation (103a, 103'a, 203a) ;
- au moins une masse (104, 104', 204) placée sur la tête (101, 101', 201) et excentrée par rapport à l'arbre (103, 103', 203) principal ;
- un registre (105, 105', 205) de la masse (104, 104', 204) excentrique relié à ladite masse (104, 104', 204) et à l'arbre (103, 103', 203) principal ensemble à la masse (104, 104', 204) excentrique ;
- un appareil de régulation (106, 106', 206) pour réguler la distance entre le centre de la masse (104, 104', 204) et l'axe de rotation (103a, 103'a, 203a) de l'arbre (103, 103', 203) principal relié audit registre (105, 150', 205) ;
**caractérisé en ce que** l'appareil de régulation (106, 106', 206) comprend un appareil de compensation des vibrations (107, 107', 207) relié à la masse (104, 104', 204) excentrique et reliant le registre (105, 105', 205) à ladite masse (104, 104', 204) excentrique.

2. Dispositif de secousse (100, 100', 200) selon la revendication 1, **caractérisé en ce que** le système de compensation des vibrations (107, 107', 207) comprend au moins un ressort (108 ; 107'a, 107'b ; 207a, 207b), situé dans un siège formé dans la masse (104) excentrique.

3. Dispositif de secousse (100, 100', 200) selon la revendication 2, **caractérisé en ce que** le système de compensation des vibrations (107', 207) comprend un premier ressort (107'a, 207a) positionné perpendiculairement à l'axe de rotation (103', 203) conçu pour commander automatiquement la variation du registre (105', 205) et un deuxième et un troisième ressort (107'b, 207b) positionnés respectivement sur les côtés de l'axe (103', 203).

4. Dispositif de secousse (100, 100', 200) selon la revendication 3, **caractérisé en ce que** le premier ressort (107'a, 207a) est placé dans un siège formé à l'intérieur du registre (105', 205) et les deuxième et troisième ressorts (107'b, 207b) sont placés en parallèle dans le siège formé à l'intérieur de la masse (104'a, 204a) excentrique.

5. Dispositif de secousse (100, 100', 200) selon la revendication 1, **caractérisé en ce qu'**il comprend au moins un guide (119', 219) tournant par rapport à l'axe de rotation (103'a, 203a) et auquel l'arbre (103', 203) est accouplé et conçu pour coulisser le registre (105', 205) perpendiculairement à l'arbre (103', 203) principal et pour laisser la masse (104', 204) se déplacer.

6. Dispositif de secousse (100, 100', 200) selon la revendication 1, **caractérisé en ce qu'**il comprend au moins un premier élément ballast (210b, 211) ajouté à la masse (104', 204) excentrique, et au moins un autre élément ballast (111', 211) pouvant être relié de manière amovible à la masse (104', 204) excentrique au moyen des trous et des éléments de fixation.

7. Dispositif de secousse (100, 100', 200) selon les revendications 1 et 6, **caractérisé en ce que** la masse (104', 204) excentrique est un corps solide muni d'ouvertures (210a), conçu pour loger et pour bloquer les éléments ballasts (111', 211) supplémentaires.

8. Dispositif de secousse (100, 100', 200) selon les revendications précédentes, **caractérisé en ce qu'**il est relié à un moteur hydraulique (108', 208) externe conçu pour positionner et pour maintenir l'axe principal (103', 203) en rotation et pour maintenir le guide (119', 219) en mouvement, l'appareil de régulation (106', 206) et la masse (104', 204) étant logés dans la tête (101', 201).

9. Dispositif de secousse (100, 100', 200) selon la revendication 1, **caractérisé en ce que** le registre (105', 205) et la masse (104', 204) excentrique sont conçus pour coulisser perpendiculairement à l'axe principal (103', 203).

10. Dispositif de secousse (100, 100', 200) selon la revendication 1, **caractérisé en ce que** la masse (104', 204) excentrique comporte le centre de gravité à une distance variable du centre de rotation.

11. Dispositif de secousse (100, 100', 200) selon la revendication 1, **caractérisé en ce qu'**il comprend au moins un bras mobile relié à la tête (101').

12. Dispositif de secousse (100, 100', 200) selon la revendication 1, **caractérisé en ce qu'**il comprend un support (202b) fixe, solidaire de la tête (201) et deux bras (202) mobiles.

13. Dispositif de secousse (100, 100', 200) selon la revendication 1, **caractérisé en ce qu'**il comprend un élément de support (109, 109', 209) situé sur un siège (110, 110', 210) de la partie terminale du bras (102, 102', 202) et comprenant une pluralité de couches (109a ... 109n ; 109'a, 109'b ... 109'n ; 209a, 209b ... 209n) présentant une densité différente les uns des autres et étant fixées et maintenues ensemble au moyen des attaches (113'p, 213p) reliées à la tête (101', 201).

14. Dispositif de secousse (100, 100', 200) permettant d'éviter l'enlèvement de l'écorce pour la collecte mécanisée des fruits suspendus selon la revendication 1, **caractérisé en ce que** ledit dispositif de régulation (106, 106', 206) est muni de moyens de réglage du déplacement automatique de la masse (104, 104', 204).
